# EUROPÄISCHE PATENTANMELDUNG

(11) **EP 2 754 646 A1**
(43) Veröffentlichungstag der Anmeldung: **16.07.2014**
(21) Anmeldenummer: 13000078.9
(22) Anmeldetag: 09.01.2013
(51) Int. Cl.: C04B 28/00, E04C 2/04

(54) **Innenausbausystem**

(71) Anmelder: EMOCell GmbH, 4173 St. Veit/Mkr. (AT)
(72) Erfinder: Weihtrager, Harald, 4173 St. Veit/Mkr. (AT)
(74) Vertreter: Landgraf, Elvira

(57) **Zusammenfassung**

Die Erfindung betrifft ein Innenausbausystem bestehend aus einer Trockenbauplatte und dazugehörigen Spachtelmassen bestehend aus Ton bzw. Lehm , dadurch gekennzeichnet, dass die Trockenbauplatte als Fasermaterial 10 bis 80 Gew% an Papierfasern und als Bindemittel 20 - 90 Gew% Ton bzw. Lehm enthalten und die Spachtelmassen aus Ton, Feldspat, Quarzsanden und Methylcellulose bestehen.

## Beschreibung

Die Erfindung betrifft ein Innenausbausystem umfassend eine Trockenbauplatte und ein System aus Spachtelmassen für den Fugenverschluß und die Oberflächengestaltung.

Trockenbauplatten werden im Wesentlichen zum Innenausbau von Gebäuden verwendet und werden dabei entweder auf einer Unterkonstruktion direkt zur Verkleidung von Wänden, Decken, Dachschrägen und dergleichen oder zum Bau von Zwischenwänden auf Ständerkonstruktionen montiert.

Platten, die Lehm und Holzbestandteile enthalten sind bekannt.

GB 1,468,239 offenbart die Herstellung von Mineralfaserplatten, beschreibt aber auch die Herstellung von Holzfaserplatten. Der Gehalt an Holzfaser bzw. Holzwolle beträgt dabei über 50 %, der Lehmgehalt von 0 bis 25 %.

DE 102 08 837 A offenbart Bausteine oder Platten aus wasserfeuchtem Lehm, zerkleinertem Holz und einem Bindemittel.

Aus DE 102 17 185 A sind Lehmplatten bekannt, die eine Holzwollarmierung enthalten.

EP 0 535 000 A beschreibt Platten mit einer Kernschicht aus Lehmgebundenen nachwachsenden Materialien wie Stroh, eingebettet in netzartige Materialien.

EP 1 674 435 A offenbart holzfaserhaltige Lehmplatten, die diverse Hilfsstoffe, vor allem auch Entwässerungshilfsmittel enthalten.

Alle diese Platten zeigen Nachteile, insbesondere bezüglich Zertrennbarkeit durch Schneiden, Sägen oder Fräsen, Bearbeitbarkeit, Festigkeit, oder Haftung eines aufzubringenden Putzes.

Ferner sind diese bekannten Holzfasern enthaltenden Ton bzw. Lehmplatten sehr schwer und damit umständlich zu handhaben.

Aufgabe der Erfindung war es, eine Trockenbauplatte bereitzustellen, die die oben genannten Nachteile nicht aufweist.

Gegenstand der Erfindung ist daher ein Innenausbausystem bestehend aus einer Trockenbauplatte und dazugehörigen Spachtelmassen bestehend aus Ton bzw. Lehm , **dadurch gekennzeichnet, dass** die Trockenbauplatte als Fasermaterial 10 bis 80 Gew% an Papierfasern und als Bindemittel 20 - 90 Gew% Ton bzw. Lehm enthalten und die Spachtelmassen aus Ton, Feldspat, Quarzsanden und Methylcellulose bestehen.

Vorteilhafterweise enthält die erfindungsgemäße Trockenbauplatte mindestens 30 % Ton bzw. Lehm.

Ab diesem Ton bzw. Lehmgehalt ist die Beständigkeit gegen Hitze und Feuer ausgezeichnet, die Trockenbauplatte ist nicht brennbar.

Tone oder Lehme mit hoher Bindefähigkeit bei geringer Quellneigung (zb: Tegel, usw) sind dafür geeignet.

Die Papierfasern sind vorzugsweise Abfallfasern aus der Papierproduktion, die eine Größe von < 3mm aufweisen, bevorzugt < 1,5 mm oder Abfallfasern aus der Zellstoffherstellung oder Recyclingfasern aus Altpapier.

Diese Papierfasern können in der Aufschlämmung des Bindemittels Ton bzw. Lehm besonders gleichmäßig verteilt werden.

Der Gehalt an Papierfasern beträgt vorteilhafterweise mindestens 20 Gew%, besonders bevorzugt 30 bis 70 Gew%.

Durch die Verwendung von Papierfasern als Fasermaterial ist die erfindungsgemäße Ton bzw. Lehm-Trockenbauplatte ist die Dichte der Platten steuerbar sodaß diese entweder deutlich leichter als vergleichbare Holzfaser-Ton bzw. Lehmplatten oder bei gleicher Masse deutlich fester sind. So kann auch bei hoher Dichte durch dünnere Platten ein geringes Plattengewicht realisiert werden.

Bei einem Tongehalt von etwa 35 Gew% beträgt die Dichte beispielsweise etwa 900 kg/m³.

Ferner kann eine Verwertung der bei der Papierproduktion als feine Abfallfasern anfallenden Papierreste erfolgen, wodurch die Deponierung des Abfalls entfällt.

Die erfindungsgemäße Trockenbauplatte ist durch ihr geringes Gewicht leicht handhabbar und damit auch von einer Person manipulier- und montierbar. Ferner ist die erfindungsgemäße Trockenbauplatte leicht bearbeitbar, und weist ausgezeichnet Eigenschaften beim Schneiden, Sägen, Fräsen, Knicken, Schrauben, Nageln und Bohren auf.

Sie lässt sich ohne weitere Vorbehandlung mit Anstrichen, Beschichtungen, wie Tapeten und dergleichen, oder Putzen versehen, wobei Ton- bzw. Lehmbasierte Putze und Anstriche besonders vorteilhaft sind.

Zudem weisen die erfindungsgemäßen Trockenbauplatten ausgezeichnete Hitzeschutz und Schalldämmungseigenschaften auf.

Durch die Verwendung von Ton bzw. Lehm als Bindemittel weisen die erfindungsgemäßen Trockenbauplatten aber auch alle vorteilhaften Eigenschaften derartigen Platten, wie eine Verbesserung des Raumklimas, durch Aufnahme von Feuchtigkeit, Bindung von unerwünschten Stoffen, wie flüchtigen organischen Komponenten, wie beispielsweise Formaldehyd (unter anderem aus Zigarettenasche), Lösungsmitteln aus Möbeln oder Bodenbelägen, Klebern und dergleichen, wie beispielsweise Alkohole, Aldehyde und dergleichen auf.

Zur Herstellung der erfindungsgemäßen Trockenbauplatte werden die Papierfasern in einer Aufschlämmung des Ton bzw. Lehms suspendiert und dann gepresst. Durch die Pressung wird die Suspension entwässert, anschließend kann eine Trocknung durch Warmluft erfolgen.

Zur Verbindung einzelner Trockenbauplatten nach der Montage wird ein Fugenspachtel verwendet.

Die Armierung der Fugen erfolgt mit Vliesstreifen aus Zellulose oder Papier.

Der erfindungsgemäße Fugenspachtel besteht vorzugsweise aus Ton, Feldspat und Quarz-Feinstsanden mit einem Korndurchmesser von etwa 0 - 0,3mm sowie Methylcellulose. Das Verhältnis von Ton/Feldspat und Quarzsanden/Methylcellulose beträgt dabei ungefähr 30/60/1.

Als Oberflächenbeschichtungen stehen Modellierspachtel, Objektspachtel und Glättspachtel zur Verfügung.

Modellierspachtel sind strukturier- und modellierbare, einfärbbare Oberflächenspachtel zur Erstellung unterschiedlicher Oberflächen.

Diese Spachtel bestehen aus Ton, Feldspat und Quarz-Feinstsanden mit einem Korndurchmesser von etwa 0 - 0,5 mm, Quarzsanden mit einem Korndurchmesser von etwa 0 - 3 mm, Methylcellulose im Verhältnis von ca. 25/50/10/1.

Objektspachtel sind schleif- oder reibbare, einfärbbare Oberflächenspachtel zur Erstellung feiner matter Oberflächen. Diese Spachtel bestehen aus Ton, Feldspat und Quarz-Feinstsanden mit einem Korndurchmesser von etwa 0 - 0,5 mm, Methylcellulose im Verhältnis von etwa 30/60/1.

Modellier- und Oberflächenspachtel können ggf. überstrichen werden.

Glättspachtel sind glättbare, einfärbbare Oberflächenspachtel zur Erstellung extrem glatter Oberflächen.

Diese Spachtel besteht aus Ton, Feldspat und Quarz-Feinstsanden mit einem Korndurchmesser von etwa 0-0,3mm, und Methylcellulose im Verhältnis von 30/60/1.

Die Glättspachtel kann zur Verbesserung der Wischbarkeit mit Natur oder Paraffinwachsen imprägniert und auf Hochglanz poliert werden.

Durch die Verwendung des Gesamtsystems bestehend aus der erfindungsgemäßen Trockenbauplatte und den dazugehörigen Spachtelmassen kann beim Innenausbau eine hohe Form- und Dickengenauigkeit erzielt werden.

Sowohl die Trockenbauplatte als auch die dazugehörigen Spachtelungen sind enorm leicht kompostierbar. Die Zusammensetzung von Ton und organischem Material ist so aufbereitet, dass sie in feuchtem Zustand der bevorzugten Nahrung des Regenwurms gleichkommt. Dadurch kommt es zur Bildung von Ton- Humuskomplexen welche die wertvollsten Anteile von Humus darstellen. Darüber hinaus wird durch diesen Vorgang CO2 aus der Luft, welches zuvor vom Baum aufgenommen, dann zur Zellulose verarbeitet wurde, endgültig in den Boden eingebaut. Durch diese besondere Eigenschaft der Erfindung können pro 1000m² ca. 10 t CO2 eingespart werden.

Zur Überprüfung der Kompostierbarkeit wurde eine herkömmliche Kompostmiete, auf der Gartenabfälle wie Rasen- und Strauchschnitt, Blätter usw. kompostiert werden, herangezogen.

Zwei Stücke der erfindungsgemäße Trockenbauplatte (29x21cm, DIN A4) partiell versehen mit Modellierspachtel und Oberflächenspachtel werden mit einem Mikroorganismen- Präparat (KE Kräuterextrakt, 10% in Wasser) übergossen und mit einer ca. 15 cm dicken Schicht des Mischmaterials der Kompostmiete überdeckt.

Nach 3 Wochen wurde die Kompostmiete wieder zerlegt um den Stand der Kompostierung dokumentieren zu können. Die in die Kompostmiete eingebrachten Platten sind weitgehend zerfallen und nur mehr fragmentarisch vorhanden. Die größten Stücke haben dabei Faustgröße und sind durch Quellung 21 mm (ursprünglich 14mm) dick geworden.

In den Platten waren bereits Regenwürmer zu finden, welche die Platten offensichtlich gerne besiedeln Da Regenwürmer durch Bildung von Ton- Humus Komplexen zu besonders fruchtbaren Böden beitragen, kann von einer erfolgreichen Integration des Platten- Komposts in den Bodenkreislauf ausgegangen werden.

Die Bestandteile des erfindungsgemäßen Innenausbausystems sind komplett wiederverwertbar.

Dabei werden Platte, Vlies und Spachtelung zerkleinert, eingemaischt und können anschließend erneut zu Platten gepresst werden

## Patentansprüche

1. Innenausbausystem bestehend aus einer Trockenbauplatte und dazugehörigen Spachtelmassen bestehend aus Ton bzw. Lehm , **dadurch gekennzeichnet, dass** die Trockenbauplatte als Fasermaterial 10 bis 80 Gew% an Papierfasern und als Bindemittel 20 - 90 Gew% Ton bzw. Lehm enthalten und die Spachtelmassen aus Ton, Feldspat, Quarzsanden und Methylcellulose bestehen.

2. Innenausbausystem nach Anspruch 1, **dadurch gekennzeichnet, dass** der Gehalt an Bindemittel in der Trockenbauplatte mindestens 20 Gew% beträgt.

3. Innenausbausystem nach einem der Ansprüche 1 oder 2, **dadurch gekennzeichnet, dass** die Papierfasern eine Größe von < 3mm aufweisen.

4. Innenausbausystem nach einem der Ansprüche 1 bis 3, **dadurch gekennzeichnet, dass** es kompostierbar ist.

5. Innenausbausystem nach einem der Ansprüche 1 bis 3, **dadurch gekennzeichnet, dass** es durch Zerkleinern von Platte, Vlies und Spachtelung, einmaischen und erneutes Pressen zu Trockenbauplatten wiederverwertbar ist.
